# EUROPEAN PATENT APPLICATION

(11) **EP 1 920 841 A1**
(43) Date of publication of application: **14.05.2008**
(21) Application number: 06782884.8
(22) Date of filing: 22.08.2006
(51) Int. Cl.: B01J 47/02, C02F 1/42

(54) **ION EXCHANGE EQUIPMENT**

(30) Priority: 25.08.2005 JP 2005243789
(71) Applicant: MIURA CO., LTD., Matsuyama-shi Ehime 799-2696 (JP)
(72) Inventor: YONEDA, Tsuyoshi, Ehime 7992696 (JP); NAKAMURA, Saburo, Ehime 7992696 (JP); ABE, Hajime, Ehime 7992696 (JP); ISSHIKI, Katsufumi, Ehime 7992696 (JP); OHNO, Hiroki, Ehime 7992696 (JP); SATO, Gen, Ehime 7992696 (JP)
(74) Representative: Green, Mark Charles
(86) International application number: PCT/JP2006/316380
(87) International publication number: WO 2007/023796

(57) **Abstract**

Ion exchange equipment which can deal with counter-flow regeneration or split-flow regeneration while simplifying a water collector. The ion exchange equipment comprises a first water collection pipe (14) communicating with a first channel (10) formed in a lid member (7) at a resin containing section (2), and second water collection pipe (20) communicating with a second channel (11) formed in the lid member (7), wherein an inner diameter of the second water collection pipe (20) is set larger than an outer diameter of the first water collection pipe (14). The water collection pipes (14, 20) have axes set coaxially with the axis of the resin containing section (2) and form a double pipe, and a third channel (12) communicating with the resin containing section (2) is formed in the lid member (7).

## Description

### TECHNICAL FIELD

The present invention relates to an ion exchange equipment including a water collector for leading treated water, a regenerant, and the like which has passed through an ion exchange resin bed, and more particularly, to an ion exchange equipment including a water collector suitable for counter-flow regeneration and split-flow regeneration.

### BACKGROUND ART

There are known ion exchange equipment for adsorbing and removing hardness components (calcium ions and magnesium ions), nitrate nitrogen (nitrate ions and nitrite ions), and the like contained in raw water such as tap water or ground water by using ion exchange resin. Of those ion exchange equipment, one which replaces the hardness components in water with sodium ions or potassium ions by using cation exchange resin is usually called a water softener. On the other hand, of the above-mentioned ion exchange equipment, one which replaces nitrate nitrogen with chloride ions by using anion exchange resin is usually called a nitrate nitrogen removal equipment.

Up to now, a vast number of water softeners are put to an industrial use for a purpose of preventing scaling which inhibits heat conductions of heating/cooling equipments epitomized by steam boilers and cooling towers. Further, recently, various utilities of soft water receive attention, so the water softener becomes widespread for a domestic use, a commercial use, a medical use, and the like.

On the other hand, the nitrate nitrogen removal equipment is put to the commercial use mainly in a restaurant business, a food-processing industry, and the like. Nitrate nitrogen is a contaminant of ground water, the contaminant being originated from chemical fertilizers. When a large amount of nitrate nitrogen is taken, there is a fear of inducing methemoglobinemia which causes an oxygen deficit in a body especially with respect to infants. Accordingly, the nitrate nitrogen removal equipment is used for a purpose of securing safe drinking water and safe food-processing water.

From the ion exchange resin, when an adsorbed amount of specific ions to be removed (such as hardness components or nitrate nitrogen) reaches a predetermined exchange capacity, the specific ions leak out to the treated water. Therefore, the ion exchange equipment is subjected to regeneration in which a regenerant (for example, sodium chloride solution) comes into contact with the ion exchange resin before the adsorbed amount of the specific ions reaches the predetermined exchange capacity, thereby restoring the exchange capacity. The regeneration is roughly classified, in terms of a relationship between a flow direction of the raw water and a flow direction of the regenerant, into co-flow regeneration, counter-flow regeneration, and split-flow regeneration.

For example, a structure of the ion exchange equipment for performing co-flow regeneration is disclosed in JP 2002-28646 A. The ion exchange resin is filled in a resin cylinder (resin tank) of a bomb shape having an opening on a top portion thereof. In an opening portion of the resin cylinder, a lid member having an inflow channel for raw water and an outflow channel for treated water separately formed is screwed. Connected to an inlet side of the outflow channel is a water collection pipe extending toward a bottom portion of the resin cylinder. Through the water collection pipe, the treated water and the regenerant which have passed through an ion exchange resin bed are introduced to outside the resin cylinder. Further, on each of an outlet side of the inflow channel and a distal end portion of the water collection pipe, a screen member for preventing an effusion of the ion exchange resin. Still further, on an inlet side of the inflow channel and an outlet side of the outflow channel, an automatic regeneration valve unit (hereinafter, referred to as "control valve unit") for switching between a channel for a water flow operation and a channel for a regeneration operation is integrated with and connected to the lid member. With such the construction, the lid member and the water collection pipe can be easily attached to and detached from the resin cylinder by being rotated together with the control valve unit. Therefore, there is an advantage in that time for assembly and maintenance can be made shorter. Accordingly, the ion exchange equipment for performing co-flow regeneration is adopted for a standard construction of a small- to medium-sized apparatus having a storage amount of the ion exchange resin is 5 to 200 L.

### DISCLOSURE OF THE INVENTION

In co-flow regeneration, a flow direction of raw water and a flow direction of a regenerant are usually set to be a forward direction, and the regenerant is fed from a raw water inflow side to the ion exchange resin bed and is discharged from a treated water outflow side. In this type of ion exchange equipment, it is difficult to regenerate the ion exchange resin positioned on the treated water outflow side (that is, regeneration advances from a side on which ion exchange groups are saturated with the specific ions). Because of this, when a dissolved salt concentration in the raw water is high, the specific ions are easy to leak out to the treated water. Further, for the same reason, an excessive amount of a regenerant for restoring the ion exchange resin to a predetermined exchange capacity is required.

On the other hand, in counter-flow regeneration, the flow direction of the raw water and the flow direction of the regenerant are usually set to be opposite directions to each other, and the regenerant is fed from the treated water outflow side to the ion exchange resin bed and is discharged from the raw water inflow side. In split-flow regeneration, the flow direction of the raw water and the flow direction of the regenerant are usually set to be a forward direction as well as opposite directions to each other, and the regenerant is fed from both the raw water inflow side and the treated water outflow side to the ion exchange resin bed and the regenerant is discharged from an inside of the ion exchange resin bed. In this type of ion exchange equipment, the ion exchange resin positioned on the treated water outflow side is sufficiently regenerated (that is, regeneration advances from a side on which ion exchange groups are not saturated with the specific ions). Because of this, even when the dissolved salt concentration in the raw water is high, the specific ions are not easily leak out to the treated water, thereby making it possible to secure the treated water of high quality. Further, for the same reason, the regenerant for restoring the ion exchange resin to the predetermined exchange capacity can be saved in amount as compared to co-flow regeneration.

In terms of regeneration properties as described above, in recent years in which a water quality of the raw water tends to be deteriorated while there is a demand for saving the regenerant in order to reduce time and effort in supplementing the regenerant, a type of an ion exchange equipment for performing counter-flow regeneration or split-flow regeneration are needed rather than co-flow regeneration. However, in a conventional ion exchange equipment for performing counter-flow regeneration or split-flow regeneration, the treated water and the regenerant are collected in positions different from the ion exchange resin bed, so a plurality of water collector are independently provided in the resin containing section. Accordingly, it is required to respectively connect the water collectors to channels and to valve mechanisms, thereby making a construction complicated.

The present invention has been made in view of the above-mentioned problems. It is an object of the present invention to realize an ion exchange equipment which can deal with counter-flow regeneration or split-flow regeneration while simplifying a water collector.

The present invention has been made to achieve the above-mentioned object. According to a first aspect of the present invention, an ion exchange equipment is characterized by includes: a first water collection pipe which communicates with a first channel formed in a lid member of a resin containing section; and a second water collection pipe which communicates with a second channel formed in the lid member, and is characterized in that: an inner diameter of the second water collection pipe is set to be larger than an outer diameter of the first water collection pipe; both the first water collection pipe and the second water collection pipe constitute a double pipe in which axes of the first water collection pipe and the second water collection pipe are set to coincide with an axis of the resin containing section; and the lid member is further provided with a third channel formed therein, which communicates with an inner portion of the resin containing section.

According to the first aspect of the present invention, both the water collection pipes are mounted in the resin containing section as a water collector having a double pipe structure in which the first water collection pipe is set to be an inner pipe and the second water collection pipe is set to be an outer pipe. Here, the axes of both the water collection pipes are provided so as to coincide with the axis of the resin containing section. As a result, both the water collection pipes act as a rotation center axis when the lid member is attached to/detached from the resin containing section. Further, both the water collection pipes act so as to equally distribute fluid into the resin containing section and allow fluid to equally converge from the resin containing section.

According to a second aspect of the present invention, in the first aspect of the invention the ion exchange equipment is characterized in that: a water collecting position of the first water collection pipe is set to be close to a bottom portion of the resin containing section; and a water collecting position of the second water collection pipe is set to be close to an upper portion of an ion exchange resin bed.

According to the second aspect of the present invention, during a water flow operation, raw water is fed to an upper portion of the resin containing section through the third channel. Treated water passed through the ion exchange resin bed with downflow is collected in the vicinity of a bottom portion of the resin containing section through the first water collection pipe, and is discharged from the first channel. On the other hand, during a regeneration operation, a regenerant is fed to the vicinity of the bottom portion of the resin containing section through the first channel and the first water collection pipe. At the same time, the raw water inhibits the expansion and the fluidization of the ion exchange resin bed, so the raw water is supplied to the upper portion of the resin containing section through the third channel. The regenerant passed through the ion exchange resin bed with upflow and the raw water fed to the upper portion of the resin containing section are collected in the vicinity of an upper portion of the ion exchange resin bed through the second water collection pipe, and is discharged from the second channel. As a result, an exchange capacity of the ion exchange resin is restored by counter-flow regeneration.

According to a third aspect of the present invention, in the first aspect of the invention the ion exchange equipment is characterized in that: a water collecting position of the first water collection pipe is set to be close to a bottom portion of the resin containing section; and a water collecting position of the second water collection pipe is set to be close to a middle portion of an ion exchange resin bed.

According to the third aspect of the present invention, during the water flow operation, the raw water is fed to the upper portion of the resin containing section through the third channel. The treated water passed through the ion exchange resin bed with downflow is collected in the vicinity of the bottom portion of the resin containing section through the first water collection pipe, and is discharged from the first channel. On the other hand, during the regeneration operation, a part of the regenerant is fed to the upper portion of the resin containing section through the third channel, and the other is fed to the vicinity of the bottom portion of the resin containing section through the first channel and the first water collection pipe. The regenerant passed through the ion exchange resin bed with downflow and upflow are collected in the vicinity of a middle portion of the ion exchange resin bed through the second water collection pipe, and are discharged from the second channel. As a result, the exchange capacity of the ion exchange resin is restored through split-flow regeneration.

According to the present invention, it is possible to realize an ion exchange equipment which can deal with counter-flow regeneration or split-flow regeneration while simplifying a water collector. As a result, as compared with an ion exchange equipment performing co-flow regeneration, the same assemble and maintenance properties are maintained, treated water of higher quality is ensured, and a regenerant can be saved.

### BRIEF DESCRIPTION OF THE DRAWINGS

FIG. 1 is an overall structural diagram of an ion exchange equipment according to a first embodiment.
FIG. 2 is an explanatory view showing an overall structure of a resin containing section according to the first embodiment.
FIG. 3 is an explanatory view of an enlarged upper portion of the resin containing section.
FIG. 4 is an explanatory view of a first screen member.
FIG. 5 is an explanatory view of a second screen member.
FIG. 6 is an explanatory diagram showing a water flow operation of the ion exchange equipment according to the first embodiment.
FIG. 7 is an explanatory diagram showing a backwash process of the ion exchange equipment according to the first embodiment.
FIG. 8 is an explanatory diagram showing a regeneration process of the ion exchange equipment according to the first embodiment.
FIG. 9 is an explanatory diagram showing an extrusion process of the ion exchange equipment according to the first embodiment.
FIG. 10 is an explanatory diagram showing a wash process of the ion exchange equipment according to the first embodiment.
FIG. 11 is an explanatory diagram showing a water refilling process of the ion exchange equipment according to the first embodiment.
FIG. 12 is an overall structural diagram of an ion exchange equipment according to a second embodiment.
FIG. 13 is an explanatory view showing an overall structure of a resin containing section according to the second embodiment.
FIG. 14 is an explanatory diagram showing a water flow operation of the ion exchange equipment according to the second embodiment.
FIG. 15 is an explanatory diagram showing a backwash process of the ion exchange equipment according to the second embodiment.
FIG. 16 is an explanatory diagram showing a regeneration process of the ion exchange equipment according to the second embodiment.
FIG. 17 is an explanatory diagram showing an extrusion process of the ion exchange equipment according to the second embodiment.
FIG. 18 is an explanatory diagram showing a wash process of the ion exchange equipment according to the second embodiment.
FIG. 19 is an explanatory diagram showing a water refilling process of the ion exchange equipment according to the second embodiment.

### BEST MODE FOR CARRYING OUT THE INVENTION

### (First Embodiment)

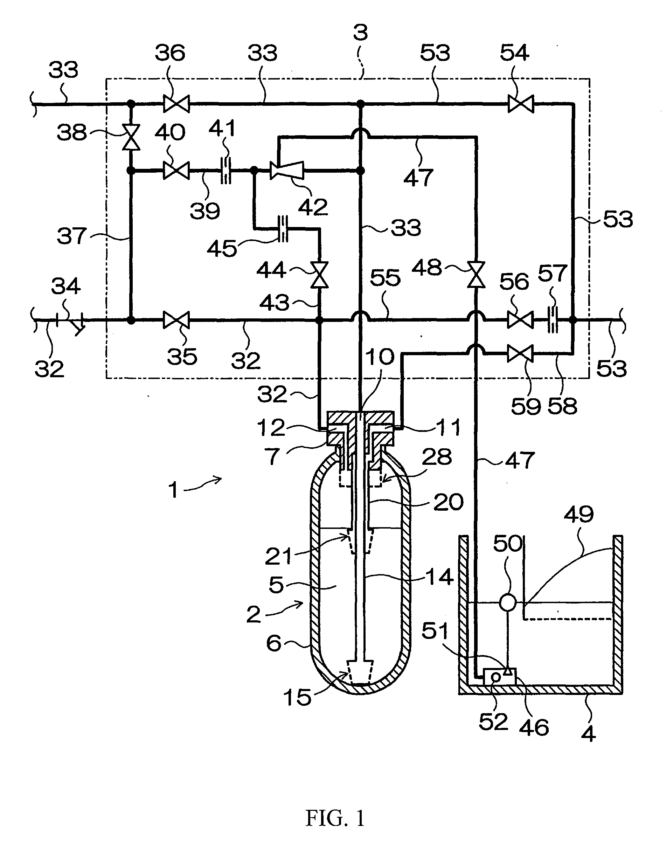

Hereinbelow, a first embodiment of the present invention will be described with reference to the drawings. FIG. 1 is an overall structural diagram of an ion exchange equipment according to the first embodiment. An ion exchange equipment according to the first embodiment is a so-called water softener, and is used for a purpose of producing soft water by replacing hardness components contained in raw water such as tap water, ground water, or industrial water with sodium ions and supplying the soft water to a place where the soft water is in demand as various types of process water. Therefore, the water softener is connected to water supply sources of residential buildings such as houses and condominiums, service facilities such as hotels and public baths, hearing/cooling equipments such as boilers and cooling towers, water-using equipments such as food-processing apparatuses and cleaning apparatuses, and the like.

In FIG. 1, an ion exchange equipment 1 mainly includes a resin containing section 2, a control valve unit 3, and a regenerant tank 4. The resin containing section 2 includes a resin cylinder 6 containing a cation exchange resin bed 5 serving as a treatment material. An opening portion of the resin cylinder 6 is closed by a lid member 7. The lid member 7 is, although not shown, provided with the control valve unit 3 integrated with and mounted to the lid member 7, which is structured such that a channel for a water flow operation and a channel for a regeneration operation of the ion exchange equipment 1 can be switched to each other, in response to a command signal from a control device (not shown).

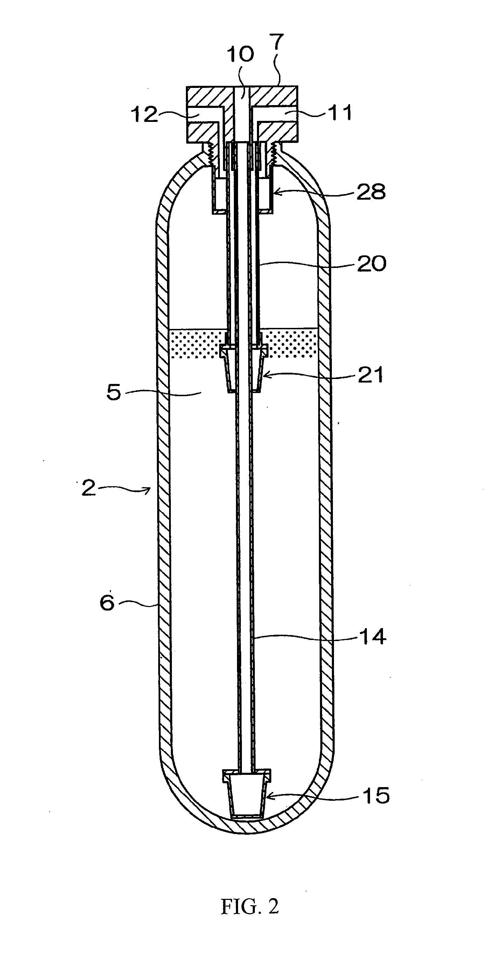

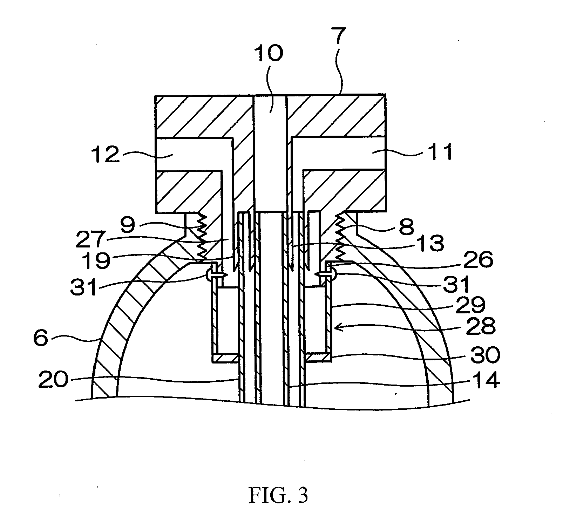

Here, with reference to FIGS. 2 and 3, a structure of the resin containing section 2 according to the first embodiment of the present invention is described in detail. FIG. 2 is an explanatory view of an overall structure of the resin containing section 2, and FIG. 3 is an explanatory view showing an enlarged upper portion of the resin containing section 2. The lid member 7 is mounted on a top portion of the resin cylinder 6, and they are connected to each other through a male screw portion 8 formed on a lower portion of the lid member 7 and a female screw portion 9 formed in the opening portion of the resin cylinder 6. The lid member 7 has a first channel 10, a second channel 11, and a third channel 12 for feeding and discharging fluid separately formed therein. As described later, the channels 10, 11, and 12 are respectively connected to various lines constituting the control valve unit 3.

A first, cylindrical sleeve 13 is formed in the lower portion of the lid member 7 such that the first sleeve 13 is coaxial with a rotation center axis of the male screw portion 8. An inner portion of the first sleeve 13 communicates with one end side of the first channel 10. A first water collection pipe 14 extending so as to be close to a bottom portion of the resin containing section 2 is inserted into the first sleeve 13. An outer peripheral surface of the first water collection pipe 14 and an inner peripheral surface of the first sleeve 13 are held in contact with each other through a seal member (not shown) such as an O-ring in a fluid-tight manner. In this case, an end surface of the first sleeve 13 is provided with an inclined portion (reference numeral is omitted) for guiding an insertion of the first water collection pipe 14. A tip portion of the first water collection pipe 14 is provided with a first screen member 15 for preventing an outflow of resin beads mounted thereon. That is, the first water collection pipe 14 is set such that the first water collection pipe 14 communicates with the first channel 10 and a water collecting position of the first screen member 15 is close to the bottom portion of the resin containing section 2.

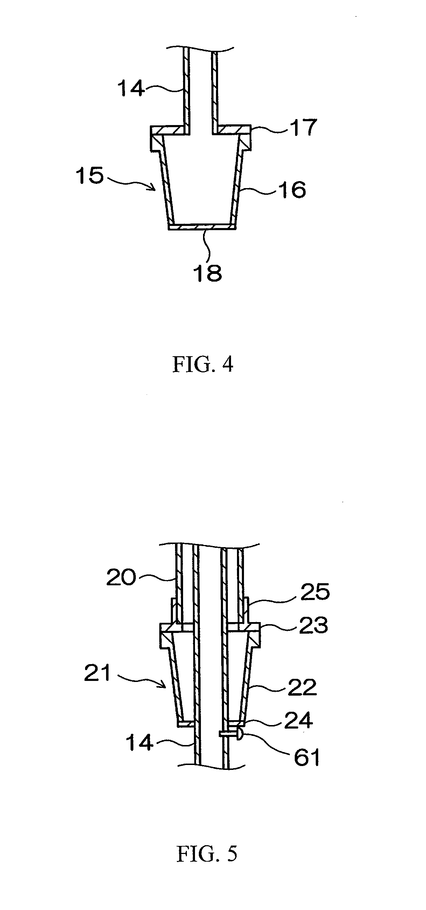

The first screen member 15 is mainly formed of, as shown in FIG. 4, a first barrel portion 16, a first connection plate 17, and a first bottom plate 18. The first barrel portion 16 is a hollow member having an upside-down conical shape, and having a number of slits (not shown) formed in a side surface thereof. Each of the slits is usually set to have a width of 0.1 to 0.3 mm such that fine resin beads are not easily pass therethrough. The first connection plate 17 is mounted so as to close a top surface of the first barrel portion 16. The first bottom plate 18 is mounted so as to close a bottom surface of the first barrel portion 16. A central portion of the first connection plate 17 has a hole having a diameter the same as an outer diameter of the first water collection pipe 14 defined therein. The tip portion of the first water collection pipe 14 is inserted into the hole. Here, the first screen member 15 is usually fixed to the first water collection pipe 14 to be integrated therewith so as not to easily fall off.

A second, cylindrical sleeve 19 is formed on an outer side of the first sleeve 13 such that the second sleeve 19 is coaxial with the rotation center axis of the male screw portion 8. An inner portion of the second sleeve 19 communicates with one end side of the second channel 11. A second water collection pipe 20 extending so as to be close to an upper portion of the cation exchange resin bed 5 is inserted into the second sleeve 19. An outer peripheral surface of the second water collection pipe 20 and an inner peripheral surface of the second sleeve 19 are held in contact with each other through a seal member (not shown) such as an O-ring in a fluid-tight manner. In this case, an end surface of the second sleeve 19 is provided with an inclined portion (reference numeral is omitted) for guiding an insertion of the second water collection pipe 20. A tip portion of the second water collection pipe 20 is provided with a second screen member 21 for preventing an outflow of resin beads mounted thereon. That is, the second water collection pipe 20 is set such that the second water collection pipe 20 communicates with the second channel 11 and a water collecting position of the second screen member 21 is in the vicinity of the upper portion of the cation exchange resin bed 5. The vicinity of the upper portion of the cation exchange resin bed 5 may correspond to, for example, an upper layer portion of the cation exchange resin bed 5 or the vicinity of a top end surface of the cation exchange resin bed 5.

Here, the inner diameter of the second water collection pipe 20 is set to be larger than the outer diameter of the first water collection pipe 14. In general, in order to ensure a sufficient flow passage sectional area, the inner diameter of the second water collection pipe 20 is set to be 1.5 to 3 times larger than the outer diameter of the first water collection pipe 14. Further, axes of both the water collection pipes 14 and 20 are set to coincide with an axis of the resin containing section 2. That is, both the water collection pipes 14 and 20 are provided to the resin containing section 2 as a water collector having a double pipe structure in which the first water collection pipe 14 is set to be an inner pipe and the second water collection pipe 20 is set to be an outer pipe.

The second screen member 21 is mainly formed of, as shown in FIG. 5, a second barrel portion 22, a second connection plate 23, and a second bottom plate 24. The second barrel portion 22 is formed in the same way as the first barrel portion 16, using common members. The second connection plate 23 is mounted so as to close a top surface of the second barrel portion 22. The second bottom plate 24 is mounted so as to close a bottom surface of the second barrel portion 22. On the top surface of the second connection plate 23, there is formed a third, cylindrical sleeve 25 having an inner diameter set to be substantially the same as an outer diameter of the second water collection pipe 20. The tip portion of the second water collection pipe 20 is inserted into the third sleeve 25. Further, a hole having the same diameter as the inner diameter of the second water collection pipe 20 is defined in a central portion of the second connection plate 23. On the other hand, a hole having a diameter the same as or a little larger than the outer diameter of the first water collection pipe 14 is defined in a central portion of the second bottom plate 24 so as to be capable of allowing the first water collection pipe 14 to pass therethrough. Here, the second screen member 21 is usually fixed to the second water collection pipe 20 to be integrated therewith so as not to easily fall off.

On an outer side of the second sleeve 19, there is formed an annular wall 26 coaxial with the rotation center axis of the male screw portion 8. A portion partitioned by the annular wall 26 and the second sleeve 19 is set to be a water collecting channel 27. An inner portion of the water collecting channel 27 communicates with one end side of the third channel 12. The annular wall 26 is provided with a third screen member 28 mounted thereto, for preventing the outflow of resin beads. That is, the third channel 12 communicates with an inner portion of the resin containing section 2.

The third screen member 28 is mainly formed of a third barrel portion 29 and a third bottom plate 30. The third barrel portion 29 is a cylindrical member having a number of slits (not shown) formed in a side surface thereof. Each of the slits is usually set to have a width of 0.1 to 0.3 mm such that fine resin beads are not easily pass therethrough. The third bottom plate 30 is mounted so as to close a bottom surface of the third barrel portion 29. A hole having a diameter the same as or a little larger than the outer diameter of the second water collection pipe 20 is defined in a central portion of the third bottom plate 29 so as to be capable of allowing the second water collection pipe 20 to pass therethrough. Here, the third screen member 28 is usually fixed to the annular wall 26 by using screws 31, 31... so as not to easily fall off from the lid member 7.

Here, an example of a method of assembling the resin containing section 2 according to the first embodiment is described in detail. In the assembling method, the first screen member 15 is fixed to a tip portion of the first water collection pipe 14, the second screen member 21 is fixed to a tip portion of the second water collection pipe 20, and the third screen member 28 is fixed to the lid member 7 in advance. Further, each of the inner surfaces of the first sleeve 13 and the second sleeve 19 is provided with a seal member (not shown) such as an O-ring mounted thereto. Further, the lid member 7 is used in a state where the control valve unit 3 is mounted so as to be integral therewith.

First, the first water collection pipe 14 is inserted into the resin cylinder 6 while the resin cylinder 6 is empty to the bottom portion of the resin cylinder 6, and then a predetermined amount of the cation exchange resin is charged in the resin cylinder 6. Here, before the charging of the cation exchange resin, supporting materials (not shown) such as silica stones may be charged therein to an extent that the first screen member 15 is buried. Further, the second water collection pipe 20 is inserted into the second sleeve 19 to be integrated with the lid member 7.

Next, the second water collection pipe 20 integrated with the lid member 7 is inserted from the second screen member 21 side along the first water collection pipe 14 such that the first water collection pipe 14 passes through the hole (not shown) defined in the central portion of the second bottom plate 24, and an upper end portion of the first water collection pipe 14 is allowed to contact with the inclined portion (reference numeral is omitted) provided to the end surface of the first sleeve 13. Then, after the male screw portion 8 and the female screw portion 9 are aligned with each other, the lid member 7 is screwed together with the control valve unit 3 into the opening portion of the resin cylinder 6 to be coupled thereto. In this case, both the water collection pipes 14 and 20 serve as the rotation center axis of the lid member 7, and the first water collection pipe 14 is inserted into the first sleeve 13 as the lid member 7 rotates, thereby making it possible to easily assemble the resin containing section 2. Further, after the assembly of the resin containing section 2, in a case where the cation exchange resin is replaced or the like, the resin containing section 2 can be easily disassembled thorough an opposite process.

An overall structure of the ion exchange equipment 1 is described in detail with another reference to FIG. 1. The third channel 12 is connected to a raw water line 32 through the control valve unit 3. Further, the first channel 10 is connected to a treated water line 33 through the control valve unit 3. That is, a part of each of the raw water line 32 and the treated water line 33 is formed inside the control valve unit 3.

The raw water line 32 is provided with, from an upstream side thereof, a strainer 34 and a first valve 35 which is included in the control valve unit 3. Here, the strainer 34 is provided for capturing a solid material such as waste in the raw water, rust stripped from pipings, and the like, and preventing clogging and contamination in the cation exchange resin bed 5. A filter used for the strainer 34 is a screen material of a metal net or a synthetic resin net. The filter is set to have an opening in a range of 250 to 300 µm. Further, the treated water line 33 is provided with a second valve 36 which is included in the control valve unit 3.

Here, a construction of the control valve unit 3 is described further in detail. In the control valve unit 3, the raw water line 32 on the upstream side of the first valve 35 is connected to the treated water line 33 on a downstream side of the second valve 36 through a bypass line 37. The bypass line 37 is provided with a third valve 38. The bypass line 37 on the upstream side of the third valve 38 is connected to the treated water line 33 on the upstream side of the second valve 36 through a regenerant preparation line 39. The regenerant preparation line 39 is provided with, from the bypass line 37 side, a fourth valve 40, a first orifice 41, and a first ejector 42. Here, the first orifice 41 serves to adjust an amount of raw water fed to the first ejector 42 to a flow rate within a predetermined range. Further, the regenerant preparation line 39 between the first orifice 41 and the first ejector 42 is connected to the raw water line 32 on a downstream side of the first valve 35 through a branch line 43. The branch line 43 is provided with, from the raw water line 32 side, a fifth valve 44 and a second orifice 45. Here, the second orifice 45 serves to adjust an amount of raw water fed for inhibiting the fluidization of the cation exchange resin bed 5 to a flow rate within the predetermined range in a regeneration process and an extrusion process described later.

The first ejector 42 is connected to a float valve unit 46 provided in the regenerant tank 4 through a regenerant feed line 47 on an ejection side of a nozzle portion (reference numeral is omitted). The regenerant feed line 47 is provided with a sixth valve 48. That is, the first ejector 42 uses a negative pressure generated when the raw water is ejected from the nozzle portion, thereby making it possible to suck the undiluted regenerant (for example, saturated solution of sodium chloride) in the regenerant tank 4. In the first ejector 42, the undiluted regenerant from the regenerant tank 4 is diluted with the raw water to a predetermined concentration (for example, 8 to 12 w/w%).

The regenerant tank 4 is a tank for preparing the undiluted regenerant used for regeneration of the cation exchange resin bed 5. A solid salt 49 (for example, granular or pellet type sodium chloride) is stocked in the regenerant tank 4. The solid salt 4 is brought into contact with the soft water fed to the regenerant tank 4 through the regenerant feed line 47 to be dissolved, thereby producing the undiluted regenerant.

The float valve unit 46 operates such that when the soft water is supplied into the regenerant tank 4 through the regenerant feed line 47, a valve body 51 moving in synchronism with a float 50 moves up to stop an inflow of the soft water at a predetermined water level. On the other hand, the float valve unit 46 operates such that when the negative pressure is generated in the first ejector 42, the valve body 51 moving in synchronism with the float 50 moves down to allow the undiluted regenerant to flow out to the regenerant feed line 47. When the undiluted regenerant in the regenerant tank 4 is consumed to the predetermined water level, a hollow ball 52 provided in the float valve unit 46 moves to an inflow port of the regenerant feed line 47 to stop sucking the undiluted regenerant and air.

The treated line 33 on the upstream side of the second valve 36 is connected to a first drain line 53 extending to outside of the control valve unit 3. The first drain line 53 is provided with a seventh valve 54. The raw water line 32 on the downstream side of the first valve 35 is connected to the first drain line 53 on the downstream side of the seventh valve 54 through a second drain line 55. The second drain line 55 is provided with, from the raw water line 32 side, an eighth valve 56 and a third orifice 57. Here, the third orifice 57 adjusts a drain amount from the resin cylinder 6 to a flow rate within a predetermined range. Further, the second flow passage 11 is connected to the first drain line 53 on the downstream side of the seventh valve 54 through a third drain line 58. The third drain line 58 is provided with a ninth valve 59.

In the control valve unit 3, the valves 35, 36, 38, 40, 44, 48, 54, 56, and 59 can adopt various operation mechanisms and valve structures. To be specific, a flow passage opening/closing valve of a lift type or a diaphragm type which is operated using a cam mechanism, a flow passage opening/closing valve of a sliding piston type which is operated using a gear mechanism, and the like are particularly preferable.

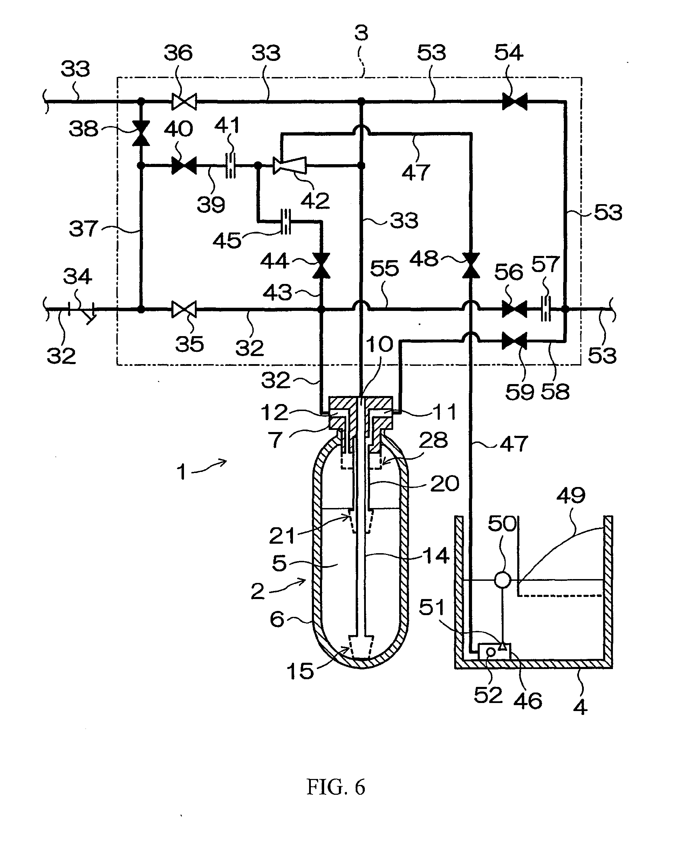

Hereinafter, the water flow operation and the regeneration operation of the ion exchange equipment 1 according to the first embodiment is described in detail with reference to FIGS. 6 to 11.

As shown in FIG. 6, during the water flow operation, according to the command signal from the control device (not shown), the first valve 35 and the second valve 36 each are set in an open state. On the other hand, the third valve 38, the fourth valve 40, the fifth valve 44, the sixth valve 48, the seventh valve 54, the eighth valve 56, and the ninth valve 59 each are set in a closed state. The raw water flowing through the raw water line 32 such as tap water, ground water, and industrial water is subjected to removal of the solid materials through the strainer 34, is then fed through the third channel 12 before being supplied from the third screen member 28 in the upper portion of the resin containing section 2. In the raw water, hardness components are replaced with sodium ions in a process in which the raw water flows through the cation exchange resin bed 5 with downflow. As a result, the raw water is softened. The soft water passed through the cation exchange resin 5 is collected in the first screen member 15 in the bottom portion of the resin containing section 2. After that, the soft water is discharged through the first water collection pipe 14, the first channel 10, and the treated water line 33 to be supplied to positions where the soft water is in demand. When the cation exchange resin cannot replace the hardness components by collecting the predetermined amount of soft water, the regeneration operation is performed.

During the regeneration operation, in order to restoring the hardness components removal capacity of the cation exchange resin, a backwash process, a regeneration process, an extrusion process, wash process, and a water refilling process will be performed in the stated order. The regeneration operation is set to be performed in midnight in which the soft water is normally not used. However, in the position where the soft water is in demand also at night, a plurality of the ion exchange equipment 1 are installed in parallel with each other or in series, and are set to alternately perform the water flow operation.

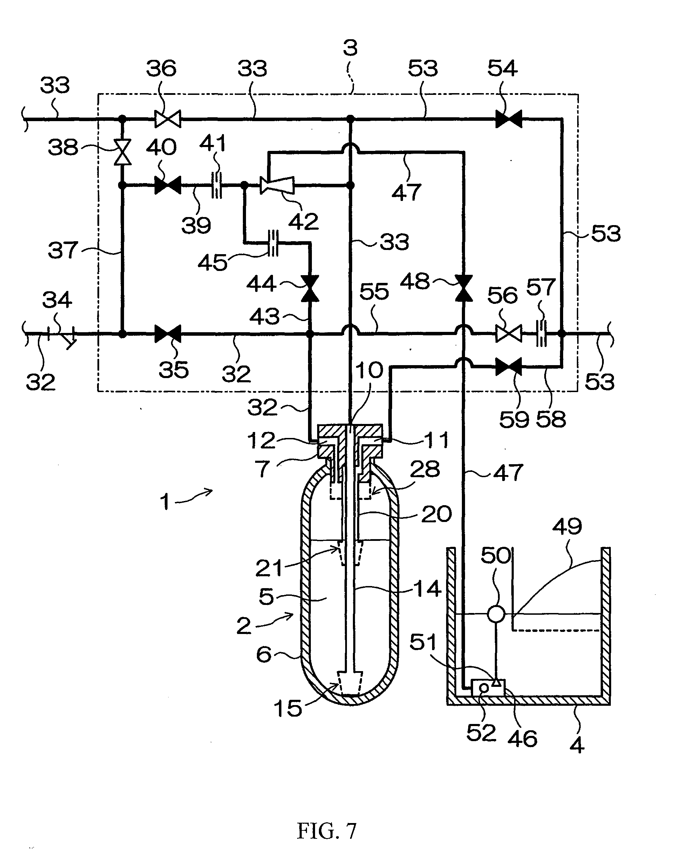

As shown in FIG. 7, in the backwash process, according to the command signal from the control device, the second valve 36, the third valve 38, and the eighth valve 56 each are set to the open state. On the other hand, the first valve 35, the fourth valve 40, and the fifth valve 44, the sixth valve 48, the seventh valve 54, and the ninth valve 58 each are set to the closed state. The raw water flowing through the raw water line 32 is fed through the bypass line 37, the treated water line 33, the first channel 10, and the first water collection pipe 14, and then, is supplied from the first screen member 15 at the bottom portion of the resin containing section 2. The raw water flows through the resin containing section 2 with upflow, and while causing the cation exchange resin bed 5 to expand, the raw water washes away suspended materials which are accumulated or fine resin beads generated by breaking. The raw water passed through the cation exchange resin bed 5 is collected in the third screen member 28 at the upper portion of the resin containing section 2. After that, the raw water is drained outside of a system from the first drain line 53 through the first channel 12, a part of the raw water line 32, and the second drain line 55. After a lapse of a predetermined period of time from the beginning of the backwash process, the process advances to the regeneration process.

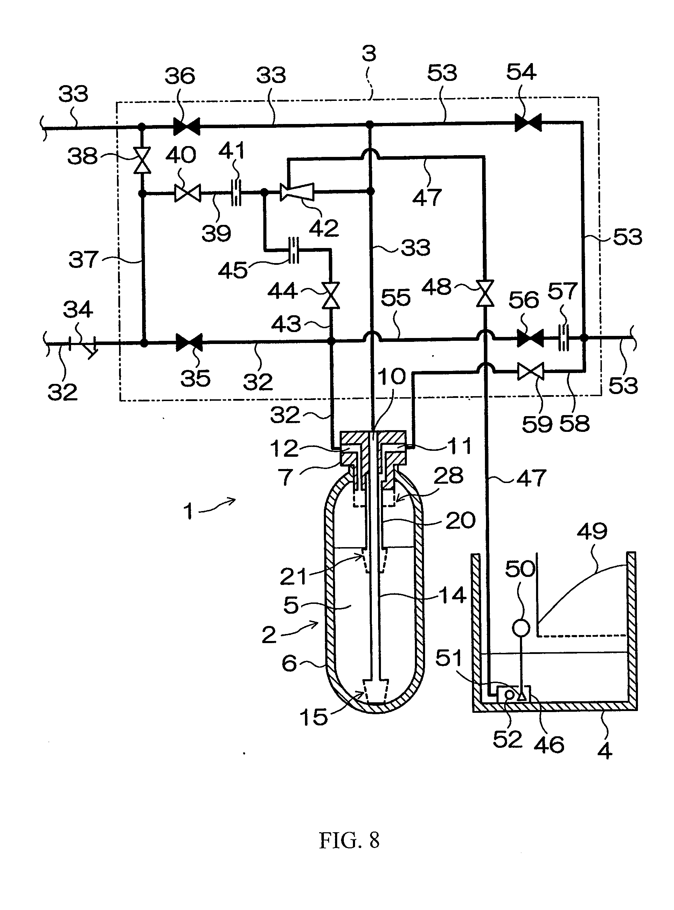

As shown in FIG. 8, in the regeneration process, according to the command signal from the control device, the third valve 38, the fourth valve 40, the fifth valve 44, the sixth valve 48, and the ninth valve 59 each are set to the open state. On the other hand, the first valve 35, the second valve 36, the seventh valve 54, and the eighth valve 56 each are set to the closed state. The raw water flowing through the raw water line 32 is fed as dilution water to a primary side of the first ejector 42 through the bypass line 37 and the regenerant preparation line 39. In the first ejector 42, when the negative pressure is generated on the ejection side of the nozzle portion (reference numeral is omitted), the negative pressure also forms in the regenerant feed line 47. Accordingly, the valve body 51 moving in synchronism with the float 50 is lowered. As a result, the undiluted regenerant in the regenerant tank 4 can be sucked through the regenerant feed line 47. In the first ejector 42, the undiluted regenerant is diluted with the raw water to the predetermined concentration, thereby preparing the regenerant. The regenerant from the first ejector 42 is fed through the regenerant preparation line 39, the treated water line 33, the first channel 10, and the first water collection pipe 14, and then is supplied from the first screen member 15 at the bottom portion of the resin containing section 2. The regenerant passes through the cation exchange resin bed 5 and regenerates resin beads. That is, in the first embodiment, counter-flow regeneration is performed with respect to the cation exchange resin bed 5. Further, during the regeneration process, a part of the raw water diverged on the primary side of the first ejector 42 is fed through the branch line 43, a part of the raw water line 32, and the third channel 12, and then is supplied from the third screen member 28 at the upper portion of the resin containing section 2. The downflow raw water downwardly presses the cation exchange resin bed 5, and inhibits the expansion and the fluidization of the cation exchange resin bed 5 caused by the upflow regenerant. Then, the regenerant passed through the cation exchange resin bed 5 and the raw water fed to the upper portion of the resin containing section 2 are collected in the second screen member 21 at the upper portion of the cation exchange resin bed 5, and then drained outside of the system from the first drain line 53 through the second water collection pipe 20, the second channel 11, and the third drain line 58. Here, when the undiluted regenerant in the regenerant tank 4 is consumed to the predetermined water level, the hollow ball 52 moves to the inflow port of the regenerant feed line 47 to stop the suction of the undiluted regenerant and the air. After a lapse of a predetermined period of time from the beginning of the regenerant process, the process advances to the extrusion process.

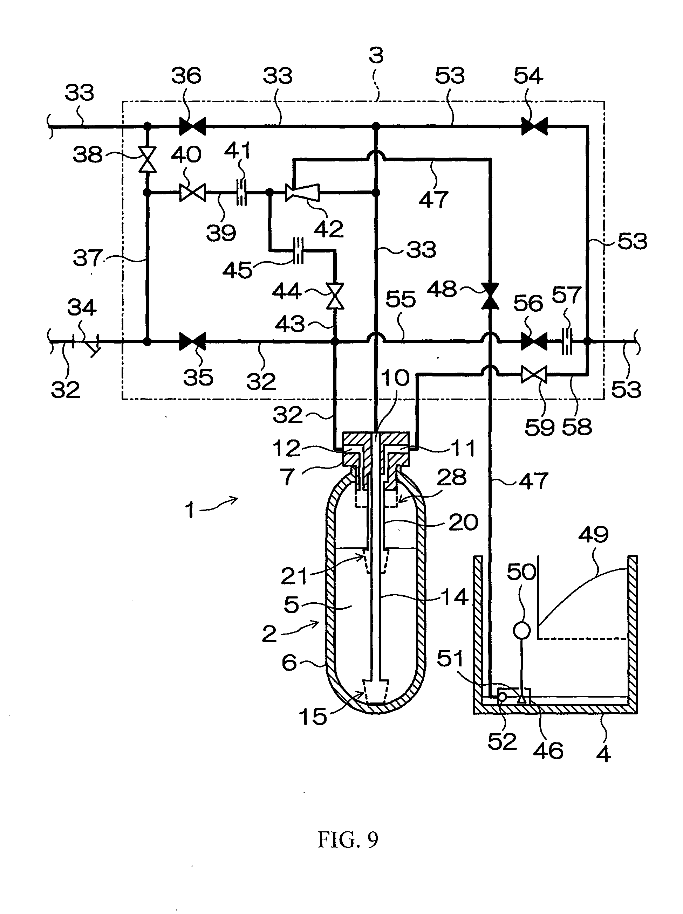

As shown in FIG. 9, in the extrusion process, according to the command signal from the control device, the third valve 38, the fourth valve 40, the fifth valve 44, and the ninth valve 59 each are set to the open state. On the other hand, the first valve 35, the second valve 36, the sixth valve 48, the seventh valve 54, and the eighth valve 56 each are set to the closed state. The raw water flowing through the raw water line 32 is fed as extrusion water to the primary side of the first ejector 42 through the bypass line 37 and the regeneranting preparation line 39. At this time, the suction of the undiluted regenerant in the first ejector 42 is stopped. The raw water from the first ejector 42 is fed through the regenerant preparation line 39, the treated water line 33, and the first channel 10, and the first water collection pipe 14, and then is supplied from the first screen member 15 at the bottom portion of the resin containing section 2. The raw water passes through the cation exchange resin bed 5 with upflow while extruding the regenerant, and continues to regenerate resin beads. Further, in the extrusion process, a part of the raw water diverged on the primary side of the first ejector 42 is fed through the branch line 43, a part of the raw water line 32, and the third channel 12, and then, is supplied from the third screen member 28 at the upper portion of the resin containing section 2. The downflow raw water downwardly presses the cation exchange resin bed 5 and inhibits the expansion and the fluidization of the cation exchange resin bed 5 caused by the upflow regenerant and raw water. The regenerant and the raw water passed through the cation exchange resin bed 5 are collected in the second screen member 21 at the upper portion of the cation exchange resin bed 5, and then, are drained outside of the system from the first drain line 53 through the second water collection pipe 20, the second channel 11, and the third drain line 58. After a lapse of a predetermined period of time from the beginning of the extrusion process, the process advances to the wash process.

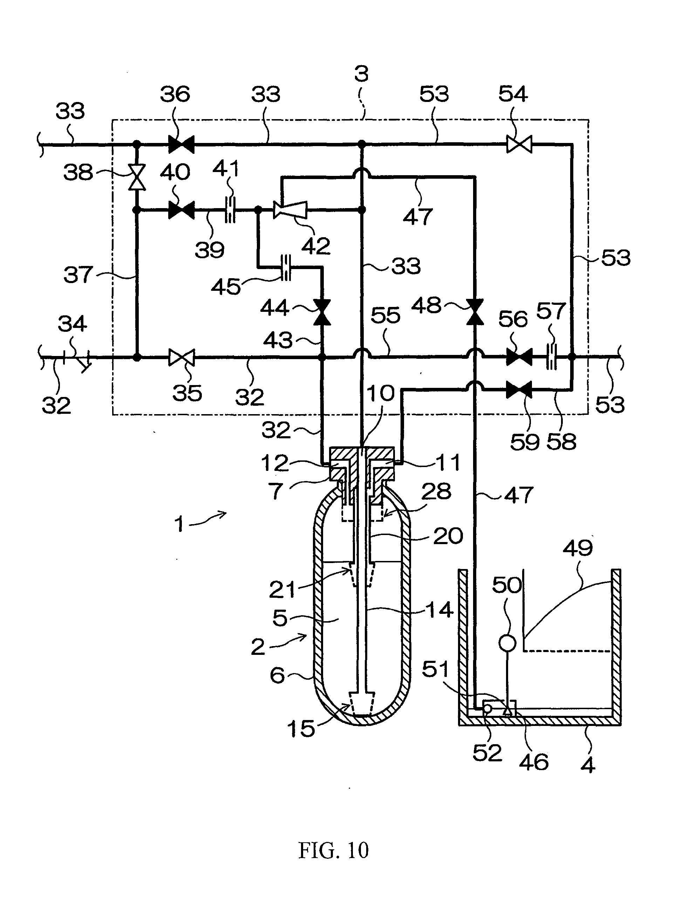

As shown in FIG. 10, in the wash process, according to the command signal from the control device, the first valve 35, the third valve 38, and the seventh valve 54 each are set to the open state. On the other hand, the second valve 36, the fourth valve 40, the fifth valve 44, the sixth valve 48, the eighth valve 56, and the ninth valve 59 each are set to the closed state. The raw water flowing through the raw water line 32 is fed as washing water through the third channel 12, and then, is supplied from the third screen member 28 at the upper portion of the resin containing section 2. While washing away the regenerant remaining in the resin cylinder 6, the raw water passes through the cation exchange resin bed 5 with downflow. The raw water passed through the cation exchange resin bed 5 is collected in the first screen member 15 at the bottom portion of the resin containing section 2, and then, is drained outside of the system through the first water collection pipe 14, the first channel 10, a part of the treated water line 33, and the first drain line 53. After a lapse of a predetermined period of time from the beginning of the wash process, the process advances to the water refilling process.

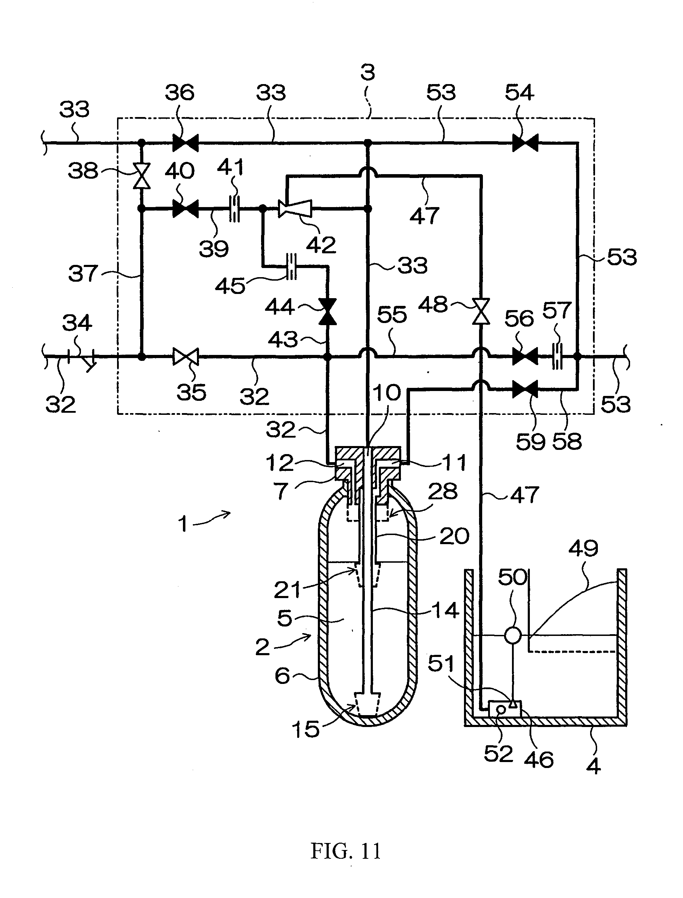

As shown in FIG. 11, in the water refilling process, according to the command signal from the control device, the first valve 35, the third valve 38, and the sixth valve 48 each are set to the open state. On the other hand, the second valve 36, the fourth valve 40, the fifth valve 44, the seventh valve 54, the eighth valve 56, and the ninth valve 59 each are set to the closed state. The raw water flowing through the raw water line 32 is fed as make-up water through the third channel 12, and then supplied from the third screen member 28 at the upper portion of the resin containing section 2. The make-up water passes through the cation exchange resin bed 5 with downflow to be softened. The make-up water passed through the cation exchange resin bed 5 is collected in the first screen member 15 at the bottom portion of the resin containing section 2, and then, is fed to a secondary side of the first ejector 42 through the first water collection pipe 14, the first channel 10, a part of the treated water line 33, and the regenerant preparation line 39. The make-up water from the first ejector 42 is fed into the regenerant tank 4 through the regenerant feed line 47. Further, in the regenerant tank 4, the valve body 51 moving in synchronism with the float 50 is raised as the water level rises, to stop the inflow of the make-up water at the predetermined water level. The soft water thus fed allows the solid salt 49 to melt to produce the undiluted regenerant, the solid salt 49 being stocked in the regenerant tank 4 during the water flow operation. When the water refilling process ends, the water flow operation is performed again.

In relation to the above, during the regeneration operation, the raw water bypassed the resin containing section 2 is supplied as required to positions where the water is in demand. During the regeneration operation, the third valve 3 8 is always set to the open state, so the raw water flowing the through the raw water line 32 on the upstream side of the first valve 35 is supplied to the treated water line 33 on the downstream side of the second valve 36 through the bypass line 37. As a result, during the regenerating operation, water can be used in positions where the water is in demand.

According to the first embodiment as described above, it is possible to realize an ion exchange equipment which can deal with counter-flow regeneration or split-flow regeneration while simplifying a water collector. As a result, as compared with the ion exchange equipment performing co-flow regeneration, it is possible to ensure the treated water of higher quality, and further to save the regenerant while maintaining the same assembly property and maintenance property.

### (Second Embodiment)

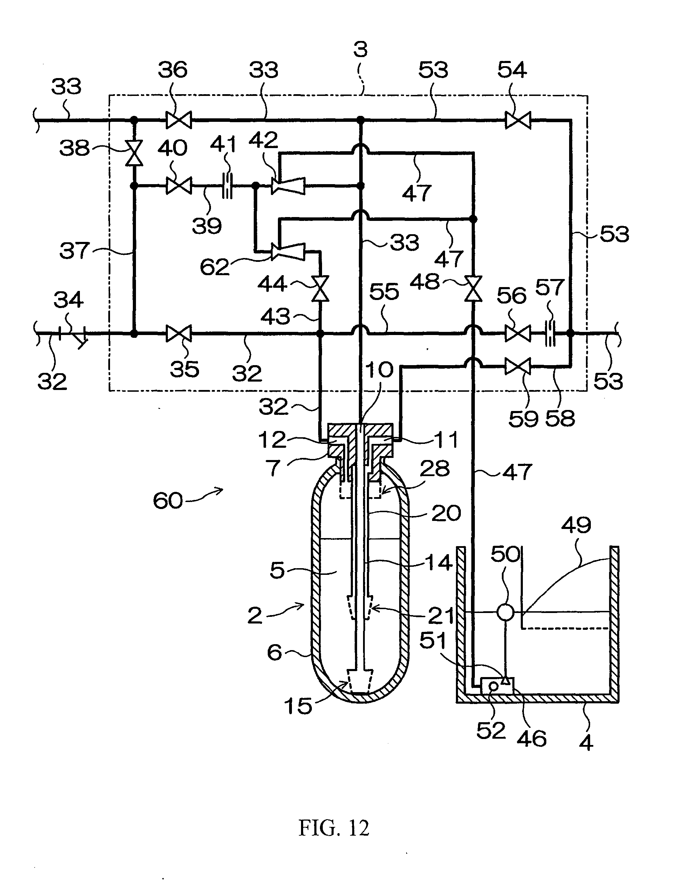

Next, a second embodiment of the present invention will be described in detail with reference to the drawings. FIG. 12 is an overall structural diagram of an ion exchange equipment according to the second embodiment. The ion exchange equipment according to the second embodiment is a modification of the first embodiment and performs split-flow regeneration instead of counter-flow regeneration. In FIG. 12, similarly to the first embodiment, an ion exchange equipment 60 mainly includes the resin containing section 2, the control valve unit 3, and the regenerant tank 4.

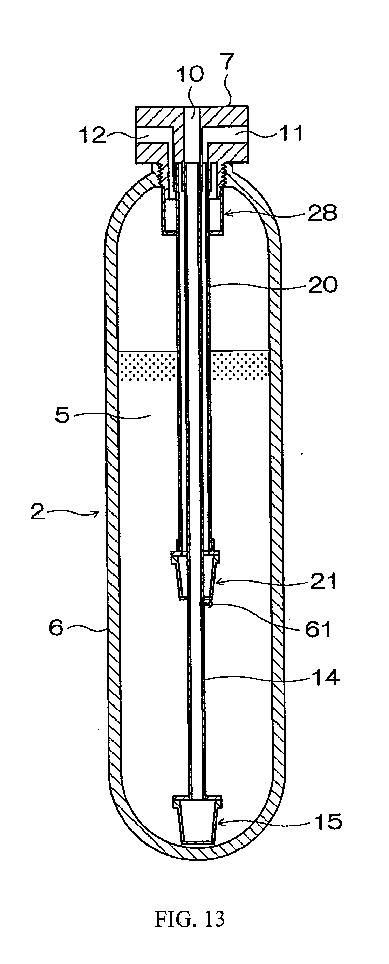

First, referring to FIG. 13, a structure of the resin containing section 2 of the second embodiment is described. FIG. 13 is an explanatory diagram showing an overall structure of the resin containing section 2. In FIG. 13, the same reference numerals as that of the first embodiment indicate the same members and the detailed descriptions of those are omitted. In the second embodiment, the second water collection pipe 20 is structured such that a position of the second screen member 21 is set in the vicinity of a middle portion of the cation exchange resin bed 5. Further, in order to prevent falling off of the second water collection pipe 20 from the lid member 7, a bottom surface side of the second screen member 21 is supported by a pin 61 fixed to a pipe wall of the first water collection pipe 14 (refer to FIG. 5).

Here, an example of an assembling method for the resin containing section 2 according to the second embodiment is described in detail. In this assembling method, the first screen member 15 is fixed to the tip portion of the first water collection pipe 14, the second screen member 21 is fixed to the tip portion of the second water collection pipe 20, and the third screen member 28 is fixed to the lid member 7 in advance. Further, the pipe wall of the first water collection pipe 14 is provided with the pin 61 fixed thereto. On an inner peripheral surface of each of the first sleeve 13 and the second sleeve 19, a seal member (not shown) such as an O-ring is mounted. Still further, the lid member 7 is used in a state where the control valve unit 3 is integrated with and mounted to the lid member 7.

First, the second water collection pipe 20 is inserted from the second screen member 21 side along the first water collection pipe 14 such that the first water collection pipe 14 passes through a hole (not shown) defined in a central portion of the second bottom plate 24, and the second screen member 21 is brought into contact with the pin 61, thereby uniting both the water collection pipes 14 and 20 with each other. In a case where the resin cylinder 6 is empty, after the second water collection pipe 20 and the first water collection pipe 14 are inserted so as to reach the bottom portion of the resin cylinder 6, a predetermined amount of the cation exchange resin is charged therein. Here, before the charging of the cation exchange resin, supporting materials (not shown) such as silica stones may be charged to an extent that the first screen member 15 is buried.

Next, upper end portions of both the water collection pipes 14 and 20 are brought into contact with the inclined portions (reference numerals are omitted) provided to the end surfaces of the first sleeve 13 and the second sleeve 19, respectively. The male screw portion 8 and the female screw portion 9 are aligned with each other, and then, the lid member 7 is screwed into the resin cylinder 6 together with the control valve unit 3 to be connected therewith. At this time, both the water collection pipes 14 and 20 act as the rotation center axis of the lid member 7, and the first water collection pipe 14 and the second water collection pipe 20 are inserted into the first sleeve 13 and the second sleeve 19, respectively, as the cap member 7 rotates. Therefore, the resin containing section 2 can be easily assembled. Further, after the resin containing section 2 is assembled, when replacement of the cation exchange resin is performed, the resin containing section 2 can be easily disassembled through an opposite procedure.

With reference to FIG. 12 again, an overall structure of the ion exchange equipment 60 is described. In FIG. 12, the same reference numerals as that of the first embodiment indicate the same members and the detailed descriptions of those are omitted.

In the ion exchange equipment 60, the bypass line 37 on the upstream side of the third valve 38 is connected to the treated water line 33 on the upstream side of the second valve 36 through the regenerant preparation line 39. The regenerant preparation line 39 is provided with, from the bypass line 37 side, the fourth valve 40, the first orifice 41, and the first ejector 42. Further, the regenerant preparation line 39 between the first orifice 41 and the first ejector 42 is connected to the raw water line 32 on the downstream side of the first valve 35 through the branch line 43. The branch line 43 is provided with, from the raw water line 32 side, the fifth valve 44 and the second ejector 62. Here, the ejectors 42 and 62 are connected to the float valve unit 46 provided in the regenerant tank 4 through the regenerant feed line 47 on an ejection side of each of nozzle portions (reference numeral is omitted).

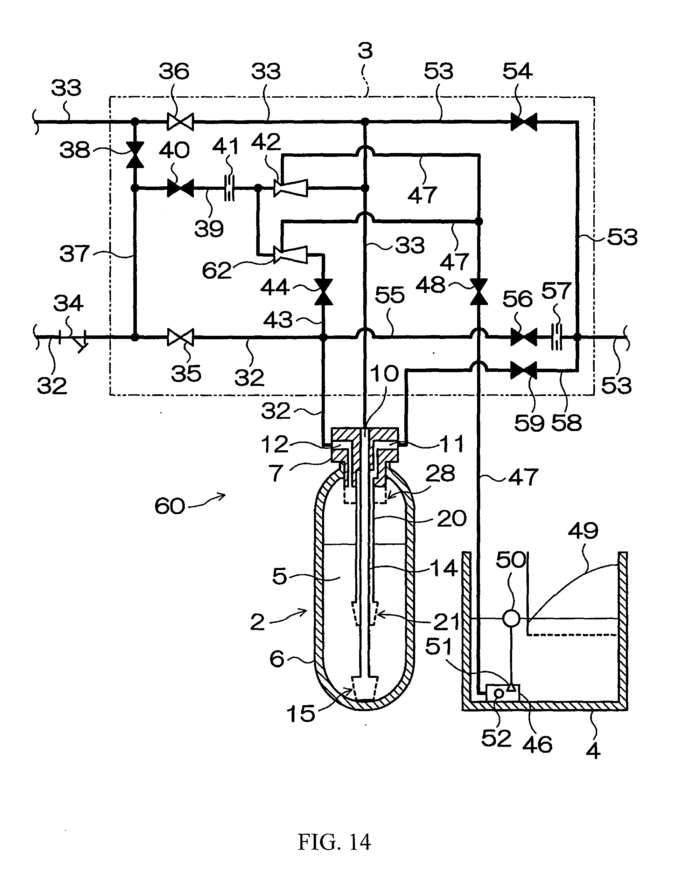

Hereinbelow, the water flow operation and the regeneration operation of the ion exchange equipment 60 of the second embodiment are described in detail with reference to FIGS. 14 to 19.

As shown in FIG. 14, during the water flow operation, according to the command signal from the control device (not shown), the first valve 35 and the second valve 36 each are set in an open state. On the other hand, the third valve 38, the fourth valve 40, the fifth valve 44, the sixth valve 48, and the seventh valve 54, the eighth valve 56, and the ninth valve 59 each are set in a closed state. The raw water flowing through the raw water line 32 such as tap water, ground water, and industrial water is subjected to removal of the solid materials through the strainer 34, is then fed through the third channel 12 before being supplied from the third screen member 28 in the upper portion of the resin containing section 2. In the raw water, hardness components are replaced with sodium ions in a process in which the raw water flows through the cation exchange resin bed 5 with downflow. As a result, the raw water is softened. The soft water passed through the cation exchange resin bed 5 is collected in the first screen member 15 in the bottom portion of the resin containing section 2. After that, the soft water is discharged through the first water collection pipe 14, the first channel 10, and the treated water line 33 to be supplied to positions where the soft water is in demand. When the cation exchange resin cannot replace the hardness components by collecting the predetermined amount of soft water, the regeneration operation is performed.

During the regeneration operation, in order to restore a hardness components removal capacity of the cation exchange resin 5, similarly to the first embodiment, a backwash process, a regeneration process, an extrusion process, a wash process, and a water refilling process are performed in the stated order.

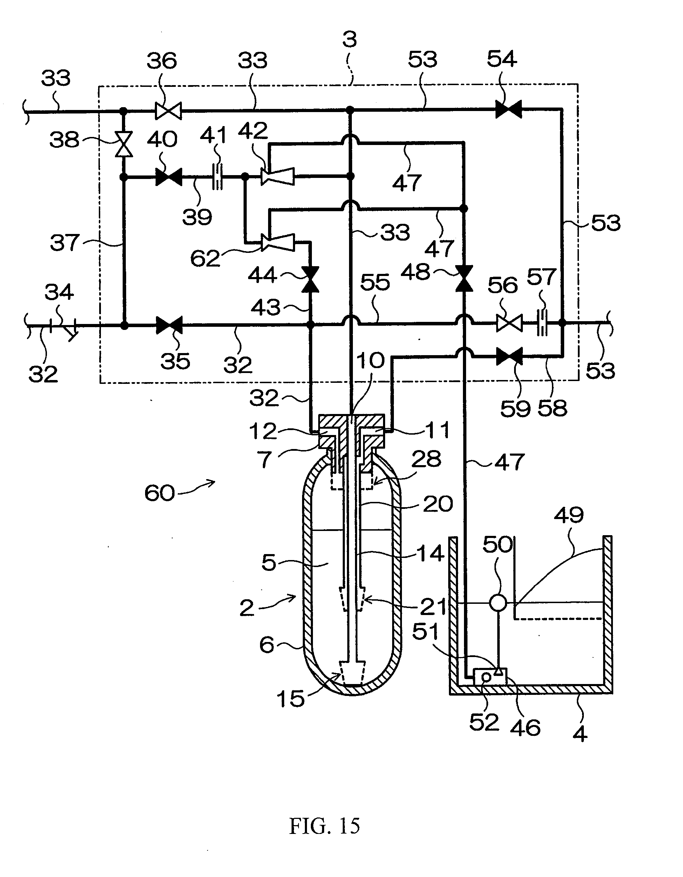

As shown in FIG. 15, in the backwash process, according to the command signal from the control device, the second valve 36, the third valve 38, and the eighth valve 56 each are set to the open state. On the other hand, the first valve 35, the fourth valve 40, the fifth valve 44, the sixth valve 48, the seventh valve 54, and the ninth valve 58 each are set to the closed state. The raw water flowing through the raw water line 32 is fed through the bypass line 37, the treated water line 33, the first channel 10, and the first water collection pipe 14, and then, is supplied from the first screen member 15 at the bottom portion of the resin containing section 2. The raw water flows through the resin containing section 2 with upflow, and while causing the cation exchange resin bed 5 to expand, the raw water washes away suspended materials which are accumulated or fine resin beads generated by breaking. The raw water passed through the cation exchange resin bed 5 is collected in the third screen member 28 at the upper portion of the resin containing section 2. After that, the raw water is drained outside of the system from the first drain line 53 through the first channel 12, a part of the raw water line 32, and the second drain line 55. After a lapse of a predetermined period of time from the beginning of the backwash process, the process advances to the regeneration process.

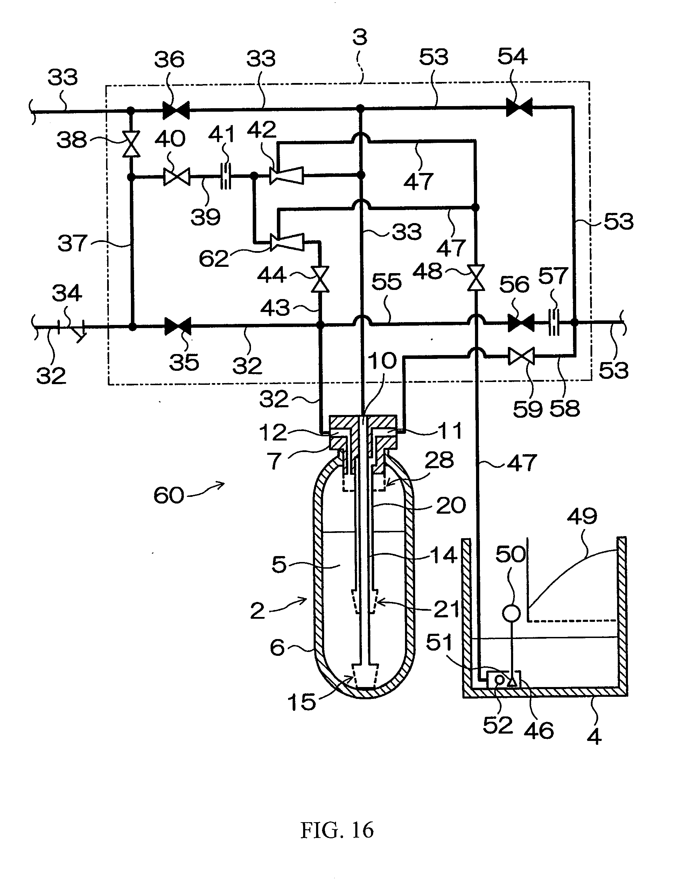

As shown in FIG. 16, in the regeneration process, according to the command signal from the control device, the third valve 38, the fourth valve 40, the fifth valve 44, the sixth valve 48, and the ninth valve 59 each are set to the open state. On the other hand, the first valve 35, the second valve 36, the seventh valve 54, and the eighth valve 56 each are set to the closed state. The raw water flowing through the raw water line 32 is fed as dilution water to a primary side of each of the ejectors 42 and 62 through the bypass line 37, the regenerant preparation line 39, and the branch line 43. In the ejectors 42 and 62, when the negative pressure is generated on the ejection side of each of the nozzle portions (reference numeral is omitted), the negative pressure is also formed in the regenerant feed line 47. Accordingly, the valve body 51 moving in synchronism with the float 50 is lowered. As a result, the undiluted regenerant in the regenerant tank 4 can be sucked through the regenerant feed line 47. In the ejectors 42 and 62, the undiluted regenerant is diluted with the raw water to the predetermined concentration, thereby preparing the regenerant. The regenerant from the first ejector 42 is fed through the regenerant preparation line 39, the treated water line 33, the first channel 10, and the first water collection pipe 14, and then is supplied from the first screen member 15 at the bottom portion of the resin containing section 2. The regenerant passes through the cation exchange resin bed 5 with upflow and regenerates a lower layer portion of the cation exchange resin bed 5. On the other hand, the regenerant from the second ejector 62 is fed through the branch line 43, a part of the raw water line 32, and the third channel 12, and then, is supplied from the third screen member 28 at the upper portion of the resin containing section 2. The regenerant passes through the cation exchange resin bed 5 with downflow and regenerate an upper layer portion of the cation exchange resin bed 5. That is, in the second embodiment, split-flow regeneration is performed with respect to the cation exchange resin bed 5. At this time, the downflow regenerant downwardly presses the cation exchange resin bed 5, and inhibits the expansion and the fluidization of the cation exchange resin bed 5 caused by the upflow regenerant. Then, the regenerant passed through the cation exchange resin bed 5 is collected in the second screen member 21 at the middle portion of the cation exchange resin bed 5, and then drained outside of the system from the first drain line 53 through the second water collection pipe 20, the second channel 11, and the third drain line 58. Here, when the undiluted regenerant in the regenerant tank 4 is consumed to the predetermined water level, the hollow ball 52 moves to the inflow port of the regenerant feed line 47 to stop the suction of the undiluted regenerant and the air. After a lapse of a predetermined period of time from the beginning of the regenerant process, the process advances to the extrusion process.

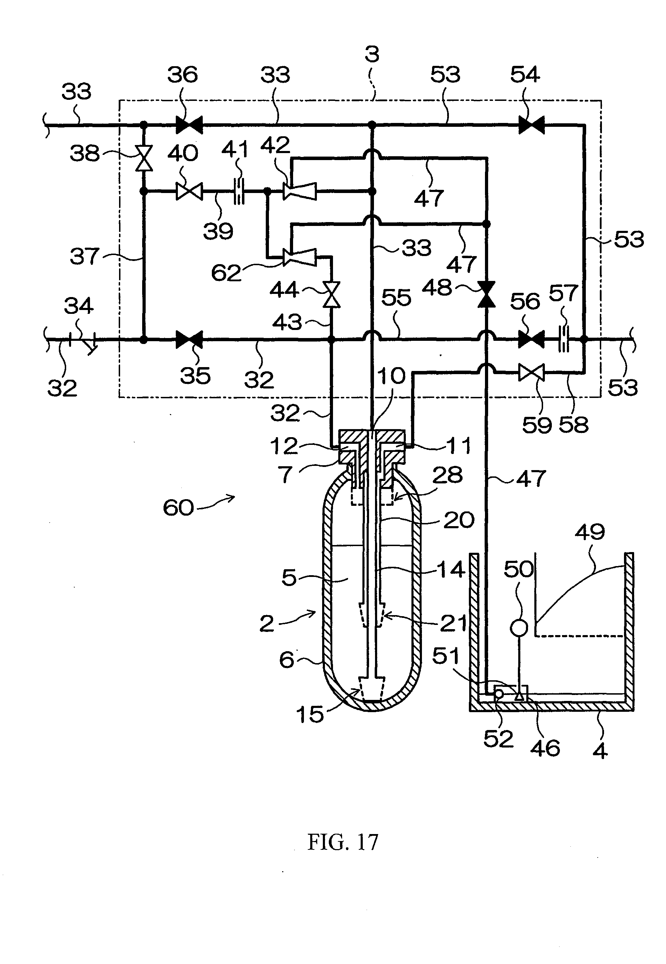

As shown in FIG. 17, in the extrusion process, according to the command signal from the control device, the third valve 38, the fourth valve 40, the fifth valve 44, and the ninth valve 59 each are set to the open state. On the other hand, the first valve 35, the second valve 36, the sixth valve 48, the seventh valve 54, and the eighth valve 56 each are set to the closed state. The raw water flowing through the raw water line 32 is fed as extrusion water to the primary side of each of the ejectors 42 and 62 through the bypass line 37 and the regenerant preparation line 39. At this time, the suction of the undiluted regenerant in each of the ejectors 42 and 62 is stopped. The raw water from the first ejector 42 is fed through the regenerant preparation line 39, the treated water line 33, and the first channel 10, and the first water collection pipe 14, and then, is supplied from the first screen member 15 at the bottom portion of the resin containing section 2. The raw water passes through the cation exchange resin bed 5 with upflow while extruding the regenerant, and continues to regenerate the lower layer portion of the cation exchange resin bed 5. The raw water from the second ejector 62 is fed through the branch line 43, a part of the raw water line 32, and the third channel 12, and then, is supplied from the third screen member 28 at the upper portion of the resin containing section 2. The raw water passes through the cation exchange resin bed 5 with downflow while extruding the regenerant, and continues to regenerate the upper layer portion the cation exchange resin bed 5. The downflow raw water downwardly presses the cation exchange resin bed 5 and inhibits the expansion and the fluidization of the cation exchange resin bed 5 from being caused by the upflow raw water. The regenerant and the raw water that have passed through the cation exchange resin bed 5 are collected in the second screen member 21 at the middle portion of the cation exchange resin bed 5, and then, are drained outside of the system from the first drain line 53 through the second water collection pipe 20, the second channel 11, and the third drain line 58. After a lapse of a predetermined period of time from the beginning of the extrusion process, the process advances to the wash process.

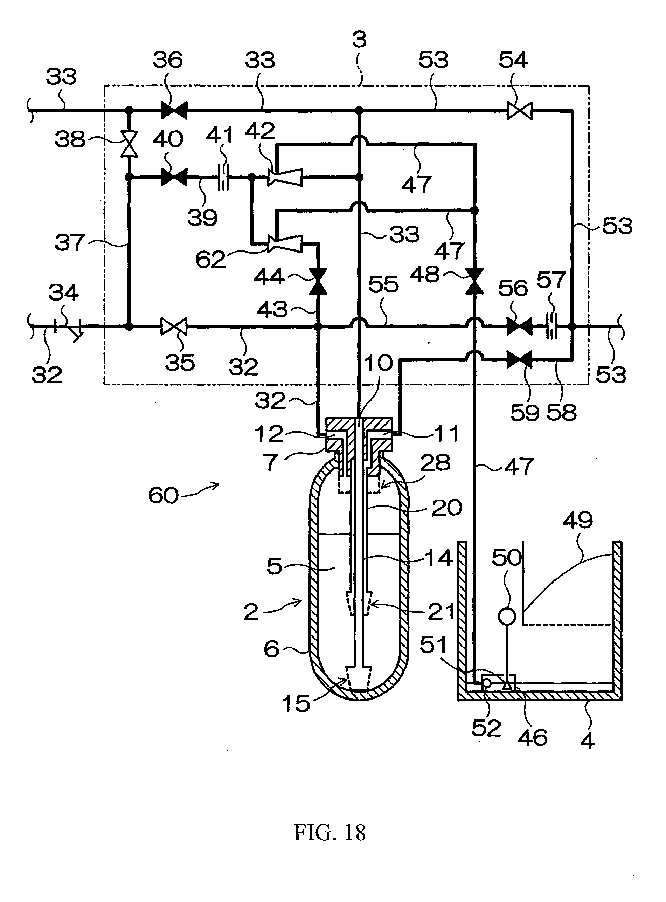

As shown in FIG. 18, in the wash process, according to the command signal from the control device, the first valve 35, the third valve 38, and the seventh valve 54 each are set to the open state. On the other hand, the second valve 36, the fourth valve 40, the fifth valve 44, the sixth valve 48, the eighth valve 56, and the ninth valve 59 each are set to the closed state. The raw water flowing through the raw water line 32 is fed as washing water through the third channel 12, and then, is supplied from the third screen member 28 at the upper portion of the resin containing section 2. While washing away the regenerant remaining in the resin cylinder 6, the raw water passes through the cation exchange resin bed 5 with downflow. The raw water passed the cation exchange resin bed 5 is collected in the first screen member 15 at the bottom portion of the resin containing section 2, and then, is drained outside of the system through the first water collection pipe 14, the first channel 10, a part of the treated water line 33, and the first drain line 53. After a lapse of a predetermined period of time from the beginning of the wash process, the process advances to the water refilling process.

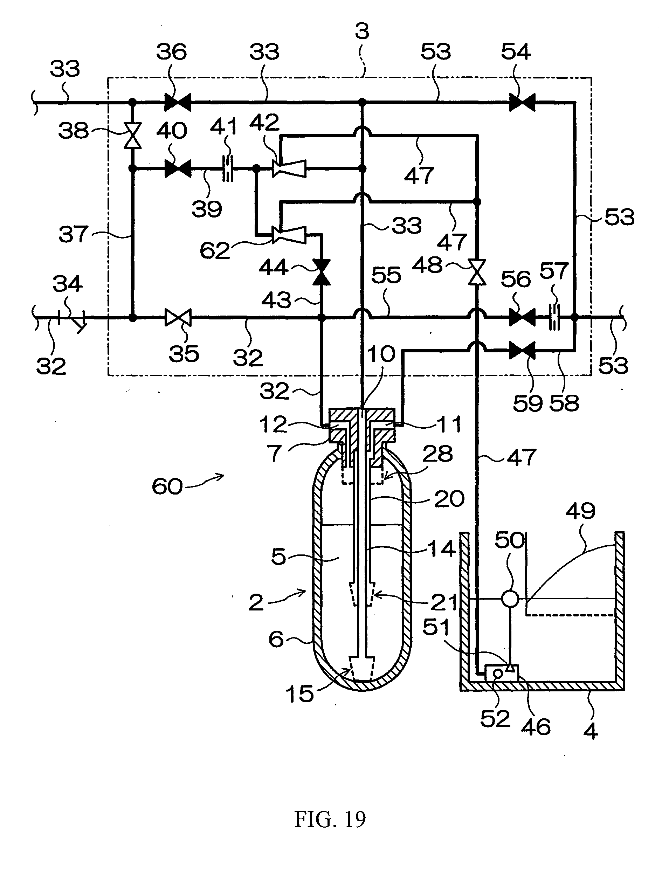

As shown in FIG. 19, in the water refilling process, according to the command signal from the control device, the first valve 35, the third valve 38, and the sixth valve 48 each are set to the open state. On the other hand, the second valve 36, the fourth valve 40, the fifth valve 44, the seventh valve 54, the eighth valve 56, and the ninth valve 59 each are set to the closed state. The raw water flowing through the raw water line 32 is fed as make-up water through the third channel 12, and then supplied from the third screen member 28 at the upper portion of the resin containing section 2. The make-up water passes through the cation exchange resin bed 5 with downflow to be softened. The make-up water passed through the cation exchange resin bed 5 is collected in the first screen member 15 at the bottom portion of the resin containing section 2, and then, is fed to a secondary side of the first ejector 42 through the first water collection pipe 14, the first channel 10, a part of the treated water line 33, and the regenerant preparation line 39. The make-up water from the first ejector 42 is fed into the regenerant tank 4 through the regenerant feed line 47. Further, in the regenerant tank 4, the valve body 51 moving in synchronism with the float 50 is raised as the water level rises, to stop the inflow of the make-up water at the predetermined water level. The soft water thus fed allows the solid salt 49 to melt to produce the undiluted regenerant, the solid salt 49 being stocked in the regenerant tank 4 during the water flow operation. When the water refilling process ends, the water flow operation is performed again.

In relation to the above, during the regeneration operation, the raw water bypassed the resin containing section 2 is supplied as required to positions where the water is in demand. During the regeneration operation, the third valve 38 is always set to the open state, so the raw water flowing the through the raw water line 32 on the upstream side of the first valve 35 is supplied to the treated water line 33 on the downstream side of the second valve 36 through the bypass line 37. As a result, during the regenerating operation, water can be used in positions where the water is in demand.

According to the second embodiment as described above, it is possible to realize an ion exchange equipment which can deal with counter-flow regeneration or split-flow regeneration while simplifying a water collector. As a result, as compared with the ion exchange equipment performing co-flow regeneration, it is possible to ensure the treated water of higher quality, and further to save the regenerant while maintaining the same assembly property and maintenance property.

### (Other Embodiments)

In the first embodiment and the second embodiment, descriptions are made of a case where the ion exchange equipment 1, 60 is used as a water softener. However, the ion exchange equipment 1, 60 may also be used for other purposes. For example, in the ion exchange equipment 1, 60, when the cation exchange resin is replaced with anion exchange resin, the ion exchange equipment 1, 60 can be used as a nitrate nitrogen removal equipment. Further, for example, two of the ion exchange equipment 1, 60 are provided, in which the cation exchange resin is used for a first ion exchange equipment and an acid is used as an undiluted regenerant, and the anion exchange resin is used for a second ion exchange equipment and an alkali is used as the undiluted regenerant, thereby making it possible to use the ion exchange equipment 1, 60 as a two-tower type water purifying equipment.

## Claims

1. An ion exchange equipment, comprising:
a first water collection pipe which communicates with a first channel formed in a lid member of a resin containing section; and
a second water collection pipe which communicates with a second channel formed in the lid member, wherein:
an inner diameter of the second water collection pipe is set to be larger than an outer diameter of the first water collection pipe;
both the first water collection pipe and the second water collection pipe constitute a double pipe in which axes of the first water collection pipe and the second water collection pipe are set to coincide with an axis of the resin containing section; and
the lid member is further provided with a third channel formed therein, which communicates with an inner portion of the resin containing section.

2. The ion exchange equipment according to claim 1, wherein:
a water collecting position of the first water collection pipe is set to be close to a bottom portion of the resin containing section; and
a water collecting position of the second water collection pipe is set to be close to an upper portion of a ion exchange resin bed.

3. The ion exchange equipment according to claim 1, wherein:
a water collecting position of the first water collection pipe is set to be close to a bottom portion of the resin containing section; and
a water collecting position of the second water collection pipe is set to be close to a middle portion of an ion exchange resin bed.
